# EUROPEAN PATENT APPLICATION

(11) **EP 0 629 787 A1**
(43) Date of publication of application: **21.12.1994**
(21) Application number: 93500087.7
(22) Date of filing: 18.06.1993
(51) Int. Cl.: F16C 11/06, B62D 7/16

(54) **Improvements in steering swivel carrier parts for vehicles**

(71) Applicant: INDUSTRIAS AUXILIARES CIMAR S.A., E-28021 Getafe (Madrid) (ES)
(72) Inventor: Martin, Felipe Herrero, 28021-Getafe (Madrid) (ES)
(74) Representative: Estela Labrador, Enrique

(57) **Abstract**

Improvements in steering swivel carrier parts for vehicles, consisting of a cylindrical metallic housing (9) open at both bases, and with the edge (11) of one of them being weakened into a bevel in order to facilitate the riveting of an internal elastic piece (1) with opening of diameter slightly less than that of the swivel, edges (3) shaped into rounded lips and with a peripheral channel (4) that increases flexibility. The zone (6) opposite the opening of this elastic piece has a hollow collar (5) with surrounding spherical zones of lesser thickness that increase the flexibility of the assembly. The base of this collar (5) has specially arranged slits (7) to provide an exit for air and surplus grease, thereby eliminating the possibility of the enclosed air causing the grease to oxidize and deteriorate.

## Description

### THE INVENTION'S SECTOR OF APPLICATION

The improvements in steering swivel carrier parts for vehicles to which this invention refers have application in the automotive accessories industry, which supplies all manner of accessory elements in which joints by means of swivels are needed, achieving unsurpassable working conditions, application and manufacture of this type of joint.

### STATE OF THE TECHNIQUE

Swivel carrier parts for vehicle steering currently consist of spherical or cylindrical casings with spherically-shaped internal elements, the opening for which has to have a diameter greater than that of the swivel to be housed inside. This brings with it the drawback that it is just as easy for the swivel to come out of its housing as it is for it to go in.

Internal pads attached to the inside of the housing have been used with an opening of diameter less than that of the swivel and with an elasticity that allows the swivel to be forced inside. But it is very difficult to remove. This kind of elastic element, however, has the drawback that, when it is totally sealed, even though it is providing elasticity to the swivel unit, the air remains inside, which tends to cause grease to become oxidized and hardened. The assembly then wears out prematurely.

Similarly, the location of these internal pads has its drawbacks in terms of sealing the upper and lower openings of the housing containing them once they have been inserted, since this is generally done by means of pressure and the thickness of the housing itself means that the rim left facing the inside is not regular and the piece has to be machined, which increasees manufacturing costs.

All these drawbacks that have existed to date are solved by the improvements referred to in this invention.

### DESCRIPTION OF THE PATENT

Improvements in steering swivel carrier parts for vehicles, specially formed by means of a cylindrical-shaped external housing created with open bases, one of them having a bevel that decreases the thickness of the edge and, since the opposite base is of greater thickness, this is forced by means of pressure to fold towards the interior in order leave a diameter slightly greater than that of the swivel that is to be housed in it.

Inside this housing is a piece consisting of a bush made from an elastic material of suitable resistance, with an external diameter equal to the internal diameter of the housing, and with a spherical internal surface equal in shape to that of the swivel to be housed inside. This piece has an opening slightly smaller than the diameter of the swivel, with rounded lips and with an external peripheral channel close to the opening and giving it extra flexibility. The upper section of this piece has a narrow collar so that it is surrounded by a spherical area of lesser thickness. Due to its flexibility this dampens the longitudinal forces on the swivel where it is seated.

The base of this hollow collar has narrow slits in the form of a cross, which allow air and surplus grease to escape so that no air can remain inside and possibly oxidize and harden the grease present there.

In order to secure this piece to the inside of the housing there is a second rim made in the area cut into a bevel shape which, because it is very thin, allows total and perfect folding without the need for later machining.

Below is a detailed description of the proposed improvements in steering swivel carrier parts for vehicles, which refers to the accompanying diagrams. This shows, by way of an example only and not in any restrictive sense, a preferred way of carrying out the invention, which is liable to any variation in detail that does not imply a fundamental alteration in the characteristics that will be claimed.

These diagrams show:

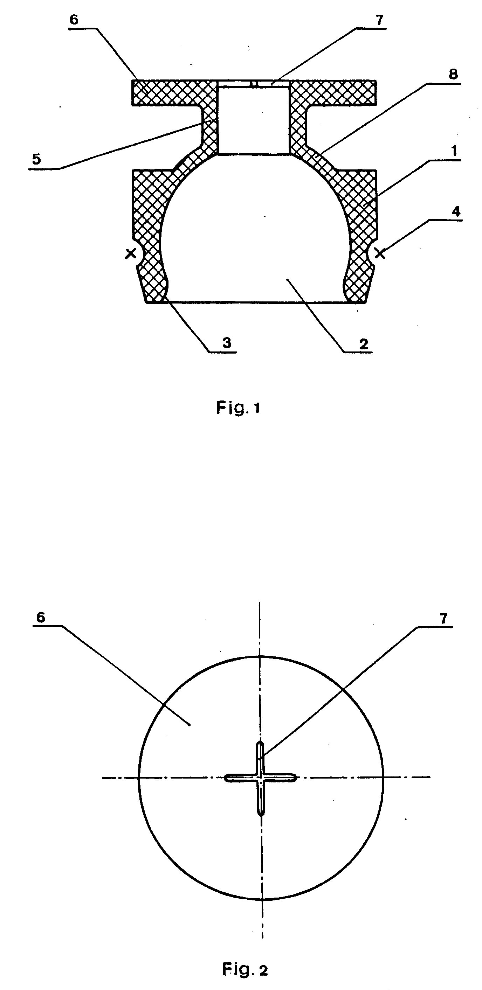

In figure 1: Diametric cross-section of the internal piece of the swivel carrier housing.
In figure 2: Plan view of that piece.

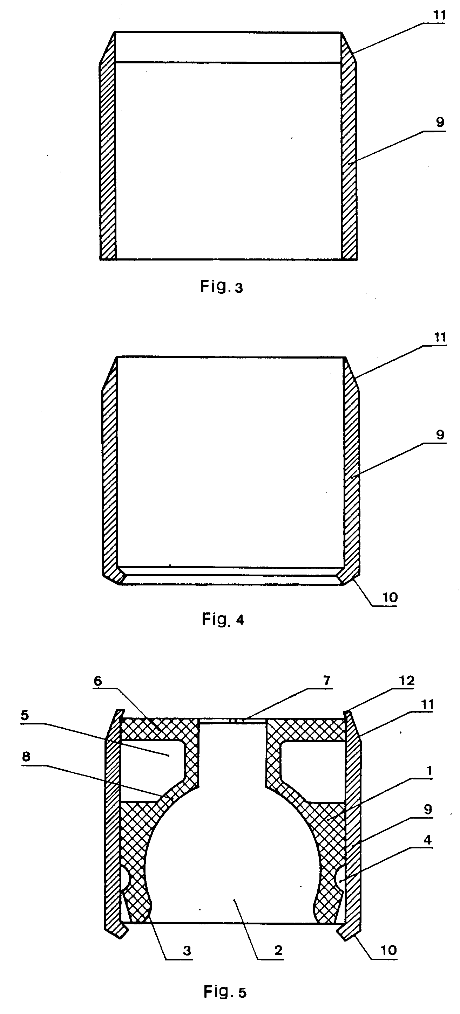

In figure 3: Diametric cross-sectional view of the housing in its first manufacturing stage.
In Figure 4: Diametric cross-sectional view of the housing in its second manufacturing stage.
In figure 5: Cross-sectional view of the housing with the internal piece located inside and with the final securing rivet.

According to the example carried out and shown here, the improvements in the cited steering swivel carrier parts for vehicles consist in a metallic cylindrical housing (9) with open bases, in which one of their edges is machined into a bevel (11) while the opposite base has its normal thickness corresponding to the wall of that housing. Inside this housing a bush (1) can be inserted. This has an external cylindrical shape equal to the interior of the housing (9), and with an internal shape consisting of a spherical surface equal to that of the swivel that is to be contained within it. Its opening (2) has a diameter slightly less than the swivel and with edges (3) lipped into a curve in order to facilitate the insertion of the swivel by means of pressure.

In order to increase the flexibility of this bush (1), which is made of an elastic and resistant material, perimetric channelling (4) is provided close to the opening (2).

The opposite base to the opening (6), which is shaped like a disc with a diameter equal to the internal diameter of the housing (9), is separated from the spherical piece by a collar (5), which creates spherically capped areas (8) of lesser thickness on each side of it, the aim being for this area to act as a damper for the longitudinal forces of the swivel inside the bush (1).

The collar (5) is hollow and in its base, in the surface of the bush (6), are some narrow slits in the form of a cross (7) that allow the air and surplus grease existing inside to exit when the swivel is inserted. This means that it is impossible for any air to remain inside where it would facilitate oxidation and hardening of the grease contained there.

In order to secure the bush (1) firmly inside the housing (9), a rivet in the weakened area (11) is provided once the bush is inserted, forming a rim (12) facing towards the interior which secures the piece (1), since before being inserted a fold has been made in the opposite edge that restricts the introduction of the bush (1) in the housing (9).

With the whole assembly arranged in this manner, the internal bush (1) forms an interior pad for the housing which, due to its flexible characteristics inside the assembly, and particularly in the spherical zone (8) surrounding the collar (5), allows all kinds of forces to be absorbed, both longitudinal and tangential. The swivel therefore functions perfectly inside the swivel carrier.

Moreover, the special shape of the housing (9), with its lower rim (10) which restricts the insertion of the elastic bush, and the upper rim in the weakened zone with a thickness that allows perfect securing without any possibility of roughness nor any need for subsequent machining, means that the manufacture of the assembly is more economical and simpler, with a reduction in costs. Added to these advantages is the fundamental one of the improvements that have been described, which is that of the air exiting through the slits (7) in the base of the collar (5), thereby removing any possibility of hardening and oxidation of the greases introduced inside, and also that of facilitating the insertion of the swivel by means of pressure due to the flexibility of the opening lips (3) and the external perimetric channelling (4) that increases this flexibility.

The shape, materials and dimensions can be varied in general whenever they are accessory and secondary, provided that the essential nature of the improvements described here are not altered, changed or modified.

## Claims

1. Improvements in steering swivel carrier parts for vehicles, characterized by the provision of a housing in which the swivel is inserted, the housing consisting of a hollow cylinder open at both bases in which one of the edges has been weakened into a bevel in order to facilitate folding towards the inside of an internal elastic piece, the insertion of which is restricted by the opposite base by means of a rim facing the interior, leaving one opening with a diameter slightly greater than that of the swivel to be introduced.

2. Improvements in steering swivel carrier parts for vehicles, as per patent claim 1, characterized by the internal elastic piece consisting of an elastic and resistant plastic bush, cylindrically shaped externally for it to be seated in the housing, with an opening slightly smaller than that of the swivel to be inserted and with an internal spherical surface with edges consisting of rounded lips and provided with peripheral channelling close to this opening that increases its flexibility in order to allow the swivel to be inserted by means of simple pressure.

3. Improvements in steering swivel carrier parts for vehicles, as per patent claims 1 and 2, characterized by the fact that the zone in the spherical surface of the internal bush has a hollow collar in its upper part, creating a spherical area around it of lesser thickness which increases the flexibility of the assembly so that it can absorb longitudinal and tangential forces.

4. Improvements in steering swivel carrier parts for vehicles, as per patent claims 1, 2 and 3, characterized by the upper base of the elastic internal piece being plane and matching the hollow collar, and that there exists slits specially arranged for air and surplus grease to be expelled when the swivel is inserted, thereby preventing air from remaining inside, which could give rise to oxidation and hardening of the grease. As described and claimed in this descriptive Report consisting of eight numbered sheets typed on one side only and with 2 diagrams illustrating it.
